# EUROPEAN PATENT SPECIFICATION

(11) **EP 2 910 812 B1**
(45) Date of publication and mention of the grant of the patent: **29.04.2020**
(21) Application number: 13847881.3
(22) Date of filing: 02.09.2013
(51) Int. Cl.: F16F 9/58, F16F 1/36

(54) **REBOUND RUBBER**
DÄMPFUNGSGUMMI
CAOUTCHOUC DE REBOND

(30) Priority: 19.10.2012 JP 2012231712
(43) Date of publication of application: 26.08.2015
(73) Proprietor: NOK Corporation, Tokyo 105-8585 (JP); Showa Corporation, Gyoda-shi, Saitama 361-8506 (JP)
(72) Inventor: TAKESUE Masami, Aso-shi Kumamoto 869-2231 (JP); UMETSU Kyohei, Kitaibaraki-shi Ibaraki 319-1535 (JP); ENDO Seiya, Gyoda-shi Saitama 361-8506 (JP)
(74) Representative: TBK
(86) International application number: PCT/JP2013/073473
(87) International publication number: WO 2014/061356

(56) References cited:
- DE-A1-102006 005 621
- JP-A- S59 501 591
- JP-A- 2009 293 667
- JP-A- 2011 085 213
- JP-U- S6 351 946
- US-A- 4 838 393
- US-A- 5 667 041
- US-A- 5 667 041

## Description

### BACKGROUND OF THE INVENTION

### Field of the Invention

The present invention relates to a rebound rubber which is employed in a rebound spring mechanism of a hydraulic shock absorber. The hydraulic shock absorber is employed in a suspension device of a vehicle such as a motor vehicle.

### Description of the Conventional Art

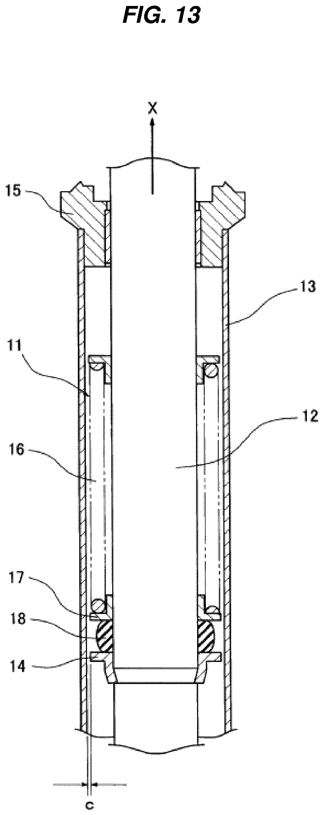

Conventionally, a rebound spring mechanism 11 of a hydraulic shock absorber shown in Fig. 13 has been known, and a rebound rubber 18 is installed as one of constructing parts thereof to the rebound spring mechanism 11.

More specifically, the rebound spring mechanism 11 is structured such as to carry out a shock absorbing operation in a stroke limit of a piston rod 12 in the case that the piston rod 12 is stroked in an extending direction (an arrow x) in relation to a cylinder 13, a rebound spring 16 is interposed in a free state between a rebound sheet 14 which is fixed to the piston rod 12, and a rod guide 15 which is fixed to the cylinder 13, between the piston rod 12 and the cylinder 13, the rebound spring 16 is compressed between the rebound sheet 14 and the rod guide 15 in the case that the piston rod 12 is stroked in the extending direction (the arrow x) in relation to the cylinder 13 from an illustrated state, and the shock absorbing operation is carried out on the basis of a repulsive force thereof.

Further, since the rebound spring 16 is retained its one end by a spring holder 17, the rebound rubber 18 is interposed between the spring holder 17 and the rebound sheet 14 so as to prevent the rebound sheet 14 from being in collision contact with the spring holder 17 and generating any collision contact noise. Therefore, the rebound rubber 18 is strongly compressed between the spring holder 17 and the rebound sheet 14 and elastically deforms greatly.

As one of factors adversely affecting a durability of the rebound rubber 18, there is a problem of a so-called biting that the rebound rubber 18 is pinched by a diametrical gap c between the rebound sheet 14 and the cylinder 13 and is damaged at the deforming time. In order to prevent the generation of the biting phenomenon, there has been conventionally employed the following countermeasures: (1) making the rubber 18 away from the gap c by attaching a chamfer to the rubber 18; and (2) suppressing an amount of deformation of the rubber 18 by enlarging the thickness (the diametrical width) of the rubber 18.

However, all of these countermeasures are not effective in the case that the thickness (the diametrical width) of the rubber 18 is limited. In other words, the countermeasure (1) can not employed since a great chamfer can not be attached in the case that the thickness of the rubber 18 is small, and the countermeasure (2) can not be inherently employed since a product shape is changed.

Patent Document 2 discloses a shock absorber which has a rebound stop assembly. The rebound stop assembly rests upon a shoulder fixed to a piston rod. The rebound stop assembly includes an elastomeric ring interposed between two collars forming an annular chamber therebetween. At the end of the rebound stroke of piston rod, the rebound stop assembly is axially compressed between the shoulder of piston rod and the rod guide until the elastomeric ring deforms to abut the inner wall of the working cylinder. As the elastomeric ring deforms, the annular chamber decreases in volume. A restrictive passage allows a restrictive flow of fluid therefrom. An additional chamber is formed which is in restrictive fluid communication through the passage with section of rebound chamber. Further compression of the stop assembly decreases the volume of both chambers, and causes restrictive fluid flow out therefrom through the passage into the section of rebound chamber. The compression of the elastomeric ring and the restrictive fluid flow provides additional damping at the end of the rebound stroke.

### PRIOR ART DOCUMENT

### Patent Document

Patent Document 1: JP 2009-293667 A
Patent Document 2: US 4,838,393 A, which is considered to be the closest prior art. Z

### SUMMARY OF THE INVENTION

### Problem to be Solved by the Invention

The present invention is made by taking the above points into consideration, and an object of the present invention is to inhibit a rebound rubber from being pinched by a diametrical gap between a rebound sheet and a cylinder and damaging at the deforming time, thereby improving a durability of the rebound rubber.

### Means for Solving the Problem

In order to achieve the object mentioned above, a rebound rubber according to claim 1 is provided. Further advantageous developments are subject-matters of the dependent claims.

A rebound rubber is interposed between a stop ring holder which retains one end of a rebound spring in a rebound spring mechanism of a hydraulic shock absorber and a rebound sheet which is fixed to a piston rod, the rebound rubber comprising:
a structure which elastically deforms so that a rubber inner diameter portion is inflected and a rubber outer diameter portion protrudes like mountains toward an outer side in a diametrical direction at the exposing time to a compressive load in an axial direction, by arranging a rubber pressure receiving surface in an inner side in the diametrical direction in relation to a center line in the diametrical direction of a rubber volume in a half-cut cross sectional shape of the rubber,
wherein an inclined surface having such a direction that a rubber axial width is made smaller little by little from the rubber pressure receiving surface to a rubber outer diameter surface is provided in each of both end surfaces in an axial direction of the rubber.

Further, a rebound rubber according to a second aspect of the present invention is the rebound rubber described in the first aspect mentioned above, wherein the rubber inner diameter portion is provided in a rubber inner diameter surface with a concavity which promotes the inflection of the rubber inner diameter portion.

In the rebound rubber according to the present invention having the structure mentioned above, the rubber pressure receiving surface is arranged in the inner side in the diametrical direction in relation to the center line in the diametrical direction of the rubber volume in the half-cut cross sectional shape of the rubber. As a result, the rubber elastically deforms so as to bend like an approximately dogleg shape in its cross section, that is, elastically deforms so that the rubber inner diameter portion is inflected and the rubber outer diameter portion protrudes like mountains toward the outer side in the diametrical direction, in the case that the rubber is interposed between the spring holder and the rebound sheet and the compressive load in the axial direction acts on the rubber. Therefore, according to the deforming attitude of the rubber as mentioned above, since the end portion in the axial direction of the rubber outer diameter surface which conventionally tended to be pinched to the diametrical gap between the rebound sheet and the cylinder hardly changes the position thereof before and after the dogleg deformation and does not come close to the diametrical gap between the rebound sheet and the cylinder, it is possible to inhibit the end portion in the axial direction of the rubber outer diameter surface from being pinched to the diametrical gap between the rebound sheet and the cylinder.

Further, in the present invention, since the rubber pressure receiving surface is arranged in the inner side in the diametrical direction in relation to the center line in the diametrical direction of the rubber volume in the half-cut cross sectional shape of the rubber as mentioned above, the width in the axial direction is set larger in the inner diameter portion than the outer diameter portion in the comparison between the inner diameter portion and the outer diameter portion of the rubber, and a difference of the width in the axial direction is set between the inner diameter portion and the outer diameter portion. The difference of the width in the axial direction may be set by the provision of a step in the axial end surface of the rubber, however, is preferably set by the provision of an inclined surface directed such that the width in the axial direction of the rubber is made smaller little by little from the rubber pressure receiving surface to the rubber outer diameter surface. As a result, since the contact area with the spring holder or the rebound sheet is increased little by little according to the compression of the rubber, the deforming attitude of the rubber is stabilized and the rubber is hard to be inclined.

Further, the rubber inner diameter surface may be formed into the cylindrical shape, however, it is preferable to set a concavity which promotes the inflection of the rubber inner diameter portion. As a result, the rubber further tends to deform. According to the function, the concavity is preferably set to be the deepest in the center portion in the axial direction of the rubber inner diameter surface, and is preferably set to be an annular shape.

### Effect of the Invention

The present invention achieves the following effects.

More specifically, in the present invention, the deforming attitude of the rebound rubber at the compressing time is specified like the approximately dogleg shape in the cross section as described above, and the end portion in the axial direction of the rubber outer diameter surface which conventionally tended to be pinched to the diametrical gap between the rebound sheet and the cylinder hardly changes the position thereof before and after the dogleg deformation and does not come close to the diametrical gap between the rebound sheet and the cylinder. Therefore, it is possible to inhibit the end portion in the axial direction of the rubber outer diameter surface from being pinched to the diametrical gap between the rebound sheet and the cylinder. Accordingly, it is possible to prevent the rebound rubber from being pinched to the diametrical gap between the rebound sheet and the cylinder at the deforming time so as to be damaged just as the desired object of the present invention, whereby it is possible to improve the durability of the rebound rubber. Further, it is possible to stabilize the deforming attitude of the rubber by the provision of the inclined surface in each of both end surfaces in the axial direction of the rubber. Further, it is possible to further promote the deformation of the rubber by the provision of the concavity in the rubber inner diameter surface.

### BRIEF EXPLANATION OF THE DRAWINGS

Fig. 1 is a cross sectional view of a substantial part of a rebound rubber according to a first embodiment of the present invention;
Fig. 2 is a cross sectional view showing an installed state of the rebound rubber;
Fig. 3 is a cross sectional view of a substantial part and shows a compression deformed state of the rebound rubber;
Fig. 4 is a cross sectional view of a substantial part of a rebound rubber according to a second embodiment of the present invention;
Fig. 5 is a cross sectional view showing an installed state of the rebound rubber;
Fig. 6 is a cross sectional view of a substantial part and shows a compression deformed state of the rebound rubber;
Fig. 7 is a cross sectional view of a substantial part of a rebound rubber according to a third embodiment of the present invention;
Fig. 8 is a cross sectional view showing an installed state of the rebound rubber;
Fig. 9 is a cross sectional view of a substantial part and shows a compression deformed state of the rebound rubber;
Fig. 10 is a cross sectional view of a substantial part of a rebound rubber according to a fourth embodiment of the present invention;
Fig. 11 is a cross sectional view showing an installed state of the rebound rubber;
Fig. 12 is a cross sectional view of a substantial part and shows a compression deformed state of the rebound rubber; and
Fig. 13 is a cross sectional view showing an installed state of a rebound rubber according to a prior art.

### DETAILED DESCRIPTION OF PREFERRED EMBODIMENTS

The following embodiments are included in the present invention.
(1) The inner diameter of the rebound rubber is inflected, and is deformed so that an outer diameter (a height center) of the rebound rubber comes into contact with an inner diameter of the cylinder. As a result, the pressure receiving surface is set to be in the inner diameter side in relation to the center of the product volume. Further, the inflection of the inner diameter is promoted by reducing the thickness of the inner diameter surface.
(2) According to the structure mentioned above, it is possible to prevent the biting between the rebound sheet and the cylinder inner diameter even in the product having a small thickness (width in the diametrical direction). Further, since it is possible to improve the durability (prevent the biting) even if the thickness is small, as an accessory effect, a cost reduction can be expected.

### Embodiments

A description will be given of embodiments according to the present invention with reference to the accompanying drawings.

Rebound rubbers 21 according to respective embodiments described below are all employed in a rebound spring mechanism 11 of a hydraulic shock absorber.

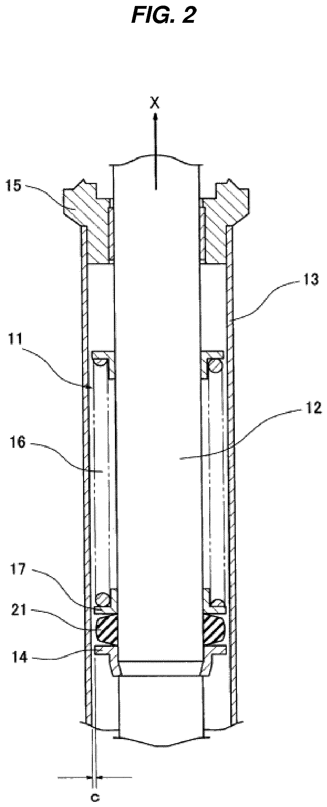

The rebound spring mechanism 11 is structured, as described above and as shown in installed state views (Figs. 2, 5, 8 and 11) in the respective embodiments, such that the rebound spring mechanism 11 carries out a shock absorbing operation at a stroke limit of a piston rod 12 in the case that the piston rod 12 strokes in an extending direction (an arrow x) in relation to a cylinder 13, a rebound spring 16 is interposed in a free state between a rebound sheet 14 which is fixed to the piston rod 12 and a rod guide 15 which is fixed to the cylinder 13, in a space between the piston rod 12 and the cylinder 13, and the rebound spring 16 is compressed between the rebound sheet 14 and the rod guide 15 and carries out the shock absorbing operation by a repulsive force thereof, in the case that the piston rod 12 strokes in the extending direction (the arrow x) in relation to the cylinder 13 from an illustrated state.

Further, since the rebound spring 16 is retained its one end by a spring holder (which is also called as a collar) 17, a rebound rubber 21 is interposed between the spring holder 17 and the rebound sheet 14 so as to prevent the rebound sheet 14 from coming into collision contact with the spring holder 17 and prevent collision contact noise from being generated. Therefore, the rebound rubber 21 is strongly compressed by being pinched between the spring holder 17 and the rebound sheet 14, and elastically deforms greatly. The rebound rubber 21 is formed into an annular shape by a predetermined rubber-like elastic body (a rubber) as its name suggests.

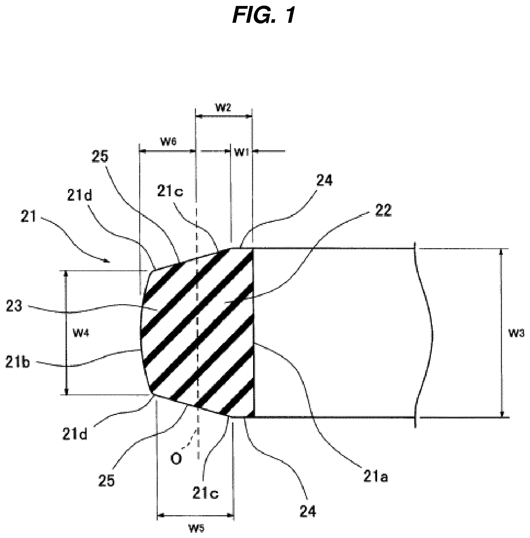

### First embodiment (Figs. 1 to 3)

A rebound rubber 21 according to a first embodiment is structured, as shown in Fig. 1, such that a rubber pressure receiving surface 24 is arranged in an inner side in a diametrical direction in relation to a center line O in a diametrical direction of a rubber volume in a half-cut cross sectional shape (an axially vertical half-cut cross sectional shape) of the rubber 21, whereby the rubber 21 elastically deforms like an approximately dogleg shape in its cross section in the case of an application of a compressive load in an axial direction, that is, elastically deforms so that a rubber inner diameter portion 22 is inflected and a rubber outer diameter portion 23 protrudes like mountains toward an outer side in the diametrical direction. An inclined surface 25 is provided in an outer side in the diametrical direction of a rubber pressure receiving surface 24.

The center line O in the diametrical direction of the rubber volume in the half-cut cross sectional shape of the rebound rubber 21 is a line which uniformly divides a rubber volume at a position closer to the inner side in the diametrical direction than the center line O and a rubber volume at a position closer to the outside in the diametrical direction than the center line O. Therefore, the center line O is actually a surface which is formed into an annular shape and a cylindrical surface shape. The rubber pressure receiving surface 24 is a position (a surface) which protrudes out mostly in the axial direction among the rubber 21, and is a position (a surface) which comes into contact with the spring holder 17 or the rebound sheet 14 so as to be exposed to the compressive load in the axial direction. The rubber inner diameter portion 22 is a position which is closer to the inner side in the diametrical direction than the center line O in the diametrical direction of the rubber volume. The rubber outer diameter portion 23 is a position which is closer to the outer side in the diametrical direction than the center line O in the diametrical direction of the rubber volume.

The shape or the cross sectional shape of the rebound rubber 21 is set as follows.

More specifically, the rebound rubber 21 is first of all provided with an inner diameter surface 21a, an outer diameter surface 21b and both axial end surfaces 21c. An annular pressure receiving surface 24 formed into an axially vertical plane shape is provided at each of positions which are closest to the inner side in the diametrical direction in the both axial end surfaces 21c. A diametrical width w1 of the pressure receiving surface 24 is set to be smaller than a diametrical width w2 of the rubber inner diameter portion 22.

Further, an axial width w4 of the outer diameter surface 21b is set to be smaller than an axial width w3 of the rubber inner diameter portion 22. An annular inclined surface 25 having such a direction that the axial width is made smaller little by little from the pressure receiving surface 24 toward the outer diameter surface 21b is provided in each of the both axial end surfaces 21c. The outer diameter surface 21b is formed into such a circular arc cross sectional shape that a center portion in an axial direction thereof protrudes mostly toward the outer side in the diametrical direction. The inclined surface 25 is formed into a linear shape in its cross section, and a diametrical width w5 thereof is set to be larger than a diametrical width w6 of the rubber outer diameter portion 23. An outer diameter of the rubber 21 is set to be smaller than an inner diameter of the cylinder 13.

Further, the inner diameter surface 21a is formed into a cylindrical surface shape over a whole length in the axial direction. An inner diameter of the rubber 21 is set to be equal or approximately equal to an outer diameter of the piston rod 12.

A cross sectional shape of the rebound rubber 21 is formed into such a shape as to be symmetrical in the axial direction, as a whole.

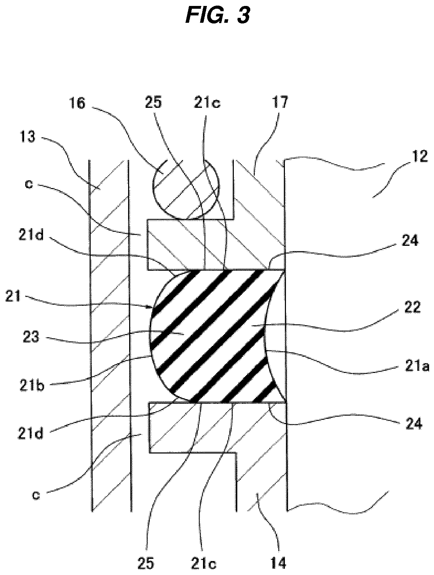

In the case that the rebound rubber 21 having the structure mentioned above is installed to the rebound spring mechanism 11 as shown in Fig. 2 and the compressive load in the axial direction is applied, the rubber 21 elastically deforms in such a manner as to bend like the dogleg cross sectional shape as shown in Fig. 3, that is, elastically deforms in such a manner that the rubber inner diameter portion 22 is inflected and the rubber outer diameter portion 23 protrudes like mountains toward the outer side in the diametrical direction. When the amount of deformation becomes great the center portion in the axial direction of the outer diameter portion 21b is pressed to the inner diameter surface of the cylinder 13. Therefore, according to a deforming attitude of the rubber 21 mentioned above, the end portion 21d in the axial direction of the rubber outer diameter surface 21b does not come close to the diametrical gap c between the rebound sheet 14 and the cylinder 13 or between the spring holder 17 and the cylinder 13 while hardly changing the position thereof before and after the dogleg shaped deformation, the end portion 21d in the axial direction conventionally having tended to be pinched to the diametrical gap c between the rebound sheet 14 and the cylinder 13 or between the spring holder 17 and the cylinder 13. Therefore, it is possible to inhibit the end portion 21d in the axial direction of the rubber outer diameter surface 21c from being pinched to the diametrical gap c between the rebound sheet 14 and the cylinder 13 or between the spring holder 17 and the cylinder 13 so as to be damaged.

Further, since the inclined surface 25 having such a direction that the axial width of the rubber 21 is made smaller little by little from the rubber pressure receiving surface 24 toward the rubber outer diameter surface 21b is provided in each of the both axial end surfaces 21c, a contact area with the spring holder 17 or the rebound sheet 14 is increased little by little in connection with the compression of the rubber 21. Therefore, it is possible to stabilize the deforming attitude of the rubber 21.

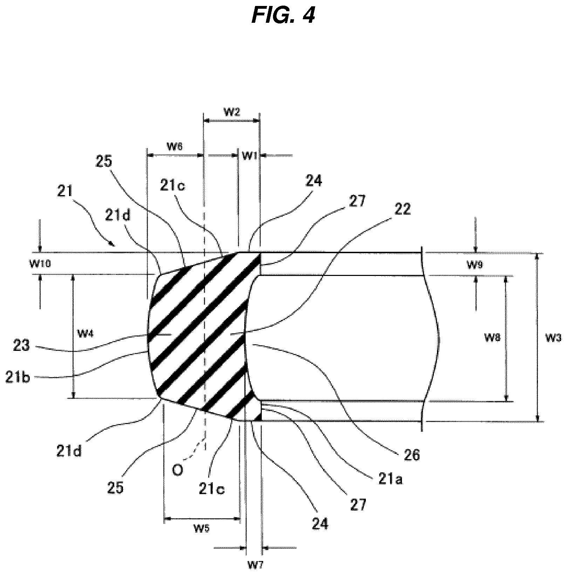

### Second embodiment (Figs. 4 to 6)

A rebound rubber 21 according to a second embodiment is structured, as shown in Fig. 4, such that a rubber pressure receiving surface 24 is arranged in an inner side in a diametrical direction in relation to a center line O in a diametrical direction of a rubber volume in a half-cut cross sectional shape (an axially vertical half-cut cross sectional shape) of the rubber 21, and a concavity 26 is provided in a rubber inner diameter portion 22, whereby the rubber 21 elastically deforms like an approximately dogleg shape in its cross section in the case of an application of a compressive load in an axial direction, that is, elastically deforms so that a rubber inner diameter portion 22 is inflected and a rubber outer diameter portion 23 protrudes like mountains toward an outer side in the diametrical direction. An inclined surface 25 is provided in an outer side in the diametrical direction of a rubber pressure receiving surface 24.

The center line O in the diametrical direction of the rubber volume in the half-cut cross sectional shape of the rebound rubber 21 is a line which uniformly divides a rubber volume at a position closer to the inner side in the diametrical direction than the center line O and a rubber volume at a position closer to the outside in the diametrical direction than the center line O. Therefore, the center line O is actually a surface which is formed into an annular shape and a cylindrical surface shape. The rubber pressure receiving surface 24 is a position (a surface) which protrudes out mostly in the axial direction among the rubber 21, and is a position (a surface) which comes into contact with the spring holder 17 or the rebound sheet 14 so as to be exposed to the compressive load in the axial direction. The rubber inner diameter portion 22 is a position which is closer to the inner side in the diametrical direction than the center line O in the diametrical direction of the rubber volume. The rubber outer diameter portion 23 is a position which is closer to the outer side in the diametrical direction than the center line O in the diametrical direction of the rubber volume.

The shape or the cross sectional shape of the rebound rubber 21 is set as follows.

More specifically, the rebound rubber 21 is provided with an inner diameter surface 21a, an outer diameter surface 21b and both axial end surfaces 21c. An annular pressure receiving surface 24 formed into an axially vertical plane shape is provided at each of positions which are closest to the inner side in the diametrical direction in the both axial end surfaces 21c. A diametrical width w1 of the pressure receiving surface 24 is set to be smaller than a diametrical width w2 of the rubber inner diameter portion 22.

Further, an axial width w4 of the outer diameter surface 21b is set to be smaller than an axial width w3 of the rubber inner diameter portion 22. An annular inclined surface 25 having such a direction that the axial width is made smaller little by little from the pressure receiving surface 24 toward the outer diameter surface 21b is provided in each of the both axial end surfaces 21c. The outer diameter surface 21b is formed into such a circular arc cross sectional shape that a center portion in an axial direction thereof protrudes mostly toward the outer side in the diametrical direction. The inclined surface 25 is formed into a linear shape in its cross section, and a diametrical width w5 thereof is set to be larger than a diametrical width w6 of the rubber outer diameter portion 23. An outer diameter of the rubber 21 is set to be smaller than an inner diameter of the cylinder 13.

Further, the annular concavity 26 is provided in the inner diameter surface 21a. A diametrical width (depth) w7 of the concavity 26 is set to be smaller than the diametrical width w1 of the pressure receiving surface 24. An axial width w8 of the concavity 26 is set to be equal or approximately equal to the axial width w4 of the outer diameter surface 21b. A straight surface 27 formed into a cylindrical surface is provided in each of both sides in an axial direction of the concavity 26 in the inner diameter surface 21a. An axial width w9 of the straight surface 27 is set to be equal or approximately equal to an axial width w10 of the inclined surface 25. An inner diameter of the rubber 21 is set to be equal or approximately equal to an outer diameter of the piston rod 12.

A cross sectional shape of the rebound rubber 21 is formed into such a shape as to be symmetrical in the axial direction, as a whole.

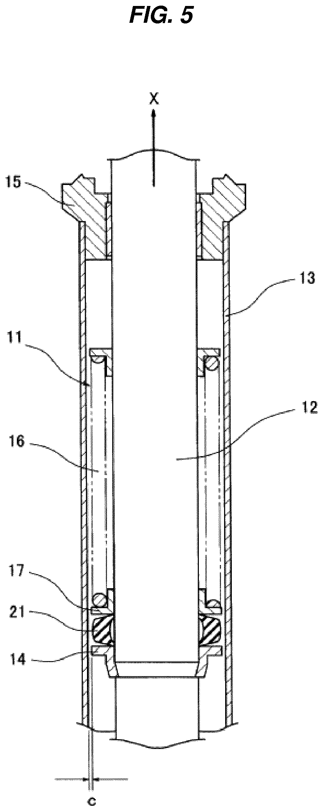

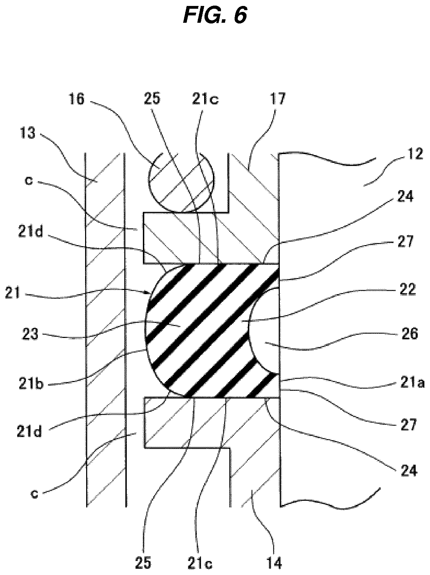

In the case that the rebound rubber 21 having the structure mentioned above is installed to the rebound spring mechanism 11 as shown in Fig. 5 and the compressive load in the axial direction is applied, the rubber 21 elastically deforms in such a manner as to bend like the dogleg cross sectional shape as shown in Fig. 6, that is, elastically deforms in such a manner that the rubber inner diameter portion 22 is inflected and the rubber outer diameter portion 23 protrudes like mountains toward the outer side in the diametrical direction. When the amount of deformation becomes great the center portion in the axial direction of the outer diameter portion 21b is pressed to the inner diameter surface of the cylinder 13. Therefore, according to a deforming attitude of the rubber 21 mentioned above, the end portion 21d in the axial direction of the rubber outer diameter surface 21b does not come close to the diametrical gap c between the rebound sheet 14 and the cylinder 13 or between the spring holder 17 and the cylinder 13 while hardly changing the position thereof before and after the dogleg shaped deformation, the end portion 21d in the axial direction conventionally having tended to be pinched to the diametrical gap c between the rebound sheet 14 and the cylinder 13 or between the spring holder 17 and the cylinder 13. Therefore, it is possible to inhibit the end portion 21d in the axial direction of the rubber outer diameter surface 21c from being pinched to the diametrical gap c between the rebound sheet 14 and the cylinder 13 or between the spring holder 17 and the cylinder 13 so as to be damaged. In the embodiment, since the concavity 26 is provided in the rubber inner diameter portion 22, the rubber 21 further tends to deform like the dogleg shape in comparison with the first embodiment.

Further, since an inclined surface 25 having such a direction that the axial width is made smaller little by little from the rubber pressure receiving surface 24 toward the rubber outer diameter surface 21b is provided in each of the both axial end surfaces 21c, a contact area with the spring holder 17 or the rebound sheet 14 is increased little by little in connection with the compression of the rubber 21. Therefore, it is possible to stabilize the deforming attitude of the rubber 21.

### Third embodiment

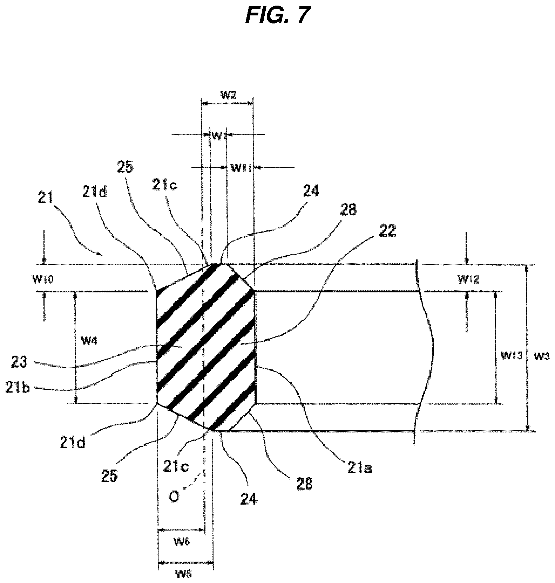

A rebound rubber 21 according to a third embodiment is structured, as shown in Fig. 7, such that a rubber pressure receiving surface 24 is arranged in an inner side in a diametrical direction in relation to a center line O in a diametrical direction of a rubber volume in a half-cut cross sectional shape (an axially vertical half-cut cross sectional shape) of the rubber 21, whereby the rubber 21 elastically deforms like an approximately dogleg shape in its cross section in the case of an application of a compressive load in an axial direction, that is, elastically deforms so that a rubber inner diameter portion 22 is inflected and a rubber outer diameter portion 23 protrudes like mountains toward an outer side in the diametrical direction. An inclined surface 25 is provided in an outer side in the diametrical direction of a rubber pressure receiving surface 24, and an inclined surface 28 is provided in an inner side in the diametrical direction.

The center line O in the diametrical direction of the rubber volume in the half-cut cross sectional shape of the rebound rubber 21 is a line which uniformly divides a rubber volume at a position closer to the inner side in the diametrical direction than the center line O and a rubber volume at a position closer to the outside in the diametrical direction than the center line O. Therefore, the center line O is actually a surface which is formed into an annular shape and a cylindrical surface shape. The rubber pressure receiving surface 24 is a position (a surface) which protrudes out mostly in the axial direction among the rubber 21, and is a position (a surface) which comes into contact with the spring holder 17 or the rebound sheet 14 so as to be exposed to the compressive load in the axial direction. The rubber inner diameter portion 22 is a position which is closer to the inner side in the diametrical direction than the center line O in the diametrical direction of the rubber volume. The rubber outer diameter portion 23 is a position which is closer to the outer side in the diametrical direction than the center line O in the diametrical direction of the rubber volume.

The shape or the cross sectional shape of the rebound rubber 21 is set as follows.

More specifically, the rebound rubber 21 is provided with an inner diameter surface 21a, an outer diameter surface 21b and both axial end surfaces 21c. An annular pressure receiving surface 24 formed into an axially vertical plane shape is provided at each of positions which are closer to the inner side in the diametrical direction than the center line O in the diametrical direction of the rubber volume in the both axial end surfaces 21c. A diametrical width w1 of the pressure receiving surface 24 is set to be smaller than a diametrical width w2 of the rubber inner diameter portion 22.

Further, an axial width w4 of the outer diameter surface 21b is set to be smaller than an axial width w3 of the rubber inner diameter portion 22. An annular inclined surface (an outer diameter side inclined surface) 25 having such a direction that the axial width is made smaller little by little from the pressure receiving surface 24 toward the outer diameter surface 21b is provided in each of the both axial end surfaces 21c. The outer diameter surface 21b is formed into a linear shape in its cross section, that is, formed into a cylindrical surface shape. The inclined surface 25 is formed into a linear shape in its cross section, and a diametrical width w5 thereof is set to be larger than a diametrical width w6 of the rubber outer diameter portion 23.

Further, an annular inclined surface (an inner diameter side inclined surface) 28 having such a direction that the axial width is made smaller little by little from the pressure receiving surface 24 toward the inner diameter surface 21a is provided in each of the both axial end surfaces 21c. The inclined surface is formed into a linear shape in its cross section, and a diametrical width w11 thereof is set to be smaller than both of the diametrical width w2 of the rubber inner diameter portion 22 and the diametrical width w5 of the outer diameter side inclined surface 25. An axial width w12 of the inner diameter side inclined surface 28 is set to be equal or approximately equal to the axial width w10 of the outer diameter side inclined surface 25. The outer diameter of the rubber 21 is set to be smaller than the inner diameter of the cylinder 13.

Further, the inner diameter surface 21a is formed into a cylindrical surface shape over a whole length in the axial direction. An inner diameter of the rubber 21 is set to be equal or approximately equal to an outer diameter of the piston rod 12.

A cross sectional shape of the rebound rubber 21 is formed into such a shape as to be symmetrical in the axial direction, as a whole.

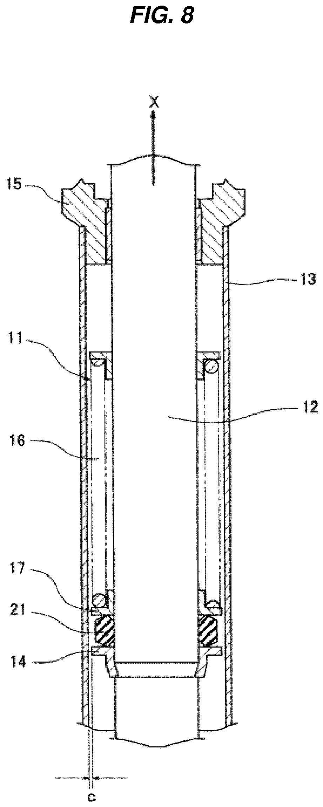

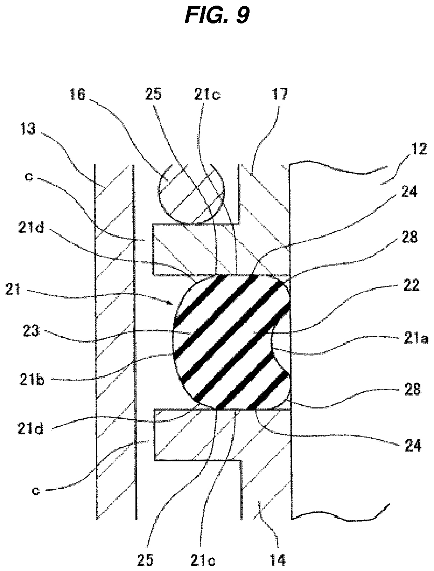

In the case that the rebound rubber 21 having the structure mentioned above is installed to the rebound spring mechanism 11 as shown in Fig. 8 and the compressive load in the axial direction is applied, the rubber 21 elastically deforms in such a manner as to bend like the dogleg cross sectional shape as shown in Fig. 9, that is, elastically deforms in such a manner that the rubber inner diameter portion 22 is inflected and the rubber outer diameter portion 23 protrudes like mountains toward the outer side in the diametrical direction. When the amount of deformation becomes great the center portion in the axial direction of the outer diameter portion 21b is pressed to the inner diameter surface of the cylinder 13. Therefore, according to a deforming attitude of the rubber 21 mentioned above, the end portion 21d in the axial direction of the rubber outer diameter surface 21b does not come close to the diametrical gap c between the rebound sheet 14 and the cylinder 13 or between the spring holder 17 and the cylinder 13 while hardly changing the position thereof before and after the dogleg shaped deformation, the end portion 21d in the axial direction conventionally having tended to be pinched to the diametrical gap c between the rebound sheet 14 and the cylinder 13 or between the spring holder 17 and the cylinder 13. Therefore, it is possible to inhibit the end portion 21d in the axial direction of the rubber outer diameter surface 21c from being pinched to the diametrical gap c between the rebound sheet 14 and the cylinder 13 or between the spring holder 17 and the cylinder 13 so as to be damaged.

Further, since the inclined surface 25 having such a direction that the axial width of the rubber 21 is made smaller little by little from the rubber pressure receiving surface 24 toward the rubber outer diameter surface 21b is provided in each of the both axial end surfaces 21c, and the inclined surface 28 having such a direction that the axial width of the rubber 21 is made smaller little by little from the rubber pressure receiving surface 24 toward the rubber inner diameter surface 21a is provided in each of the both axial end surfaces 21c, a contact area with the spring holder 17 or the rebound sheet 14 is increased little by little in connection with the compression of the rubber 21. Therefore, it is possible to stabilize the deforming attitude of the rubber 21.

### Fourth embodiment

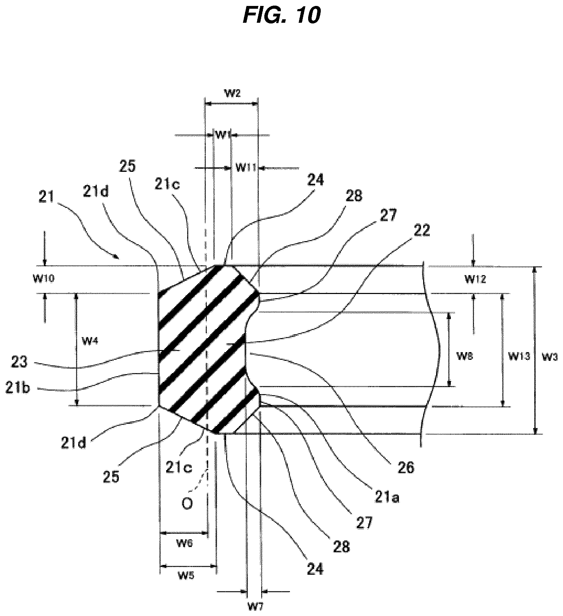

A rebound rubber 21 according to a fourth embodiment is structured, as shown in Fig. 10, such that a rubber pressure receiving surface 24 is arranged in an inner side in a diametrical direction in relation to a center line O in a diametrical direction of a rubber volume in a half-cut cross sectional shape (an axially vertical half-cut cross sectional shape) of the rubber 21, and a concavity 26 is provided in a rubber inner diameter portion 22, whereby the rubber 21 elastically deforms like an approximately dogleg shape in its cross section in the case of an application of a compressive load in an axial direction, that is, elastically deforms so that a rubber inner diameter portion 22 is inflected and a rubber outer diameter portion 23 protrudes like mountains toward an outer side in the diametrical direction. An inclined surface 25 is provided in an outer side in the diametrical direction of a rubber pressure receiving surface 24, and an inclined surface 28 is provided in an inner side in the diametrical direction.

The center line O in the diametrical direction of the rubber volume in the half-cut cross sectional shape of the rebound rubber 21 is a line which uniformly divides a rubber volume at a position closer to the inner side in the diametrical direction than the center line O and a rubber volume at a position closer to the outside in the diametrical direction than the center line O. Therefore, the center line O is actually a surface which is formed into an annular shape and a cylindrical surface shape. The rubber pressure receiving surface 24 is a position (a surface) which protrudes out mostly in the axial direction among the rubber 21, and is a position (a surface) which comes into contact with the spring holder 17 or the rebound sheet 14 so as to be exposed to the compressive load in the axial direction. The rubber inner diameter portion 22 is a position which is closer to the inner side in the diametrical direction than the center line O in the diametrical direction of the rubber volume. The rubber outer diameter portion 23 is a position which is closer to the outer side in the diametrical direction than the center line O in the diametrical direction of the rubber volume.

The shape or the cross sectional shape of the rebound rubber 21 is set as follows.

More specifically, the rebound rubber 21 is provided with an inner diameter surface 21a, an outer diameter surface 21b and both axial end surfaces 21c. An annular pressure receiving surface 24 formed into an axially vertical plane shape is provided at each of positions which are closer to the inner side in the diametrical direction than the center O in the diametrical direction of the rubber volume in the both axial end surfaces 21c. A diametrical width w1 of the pressure receiving surface 24 is set to be smaller than a diametrical width w2 of the rubber inner diameter portion 22.

Further, an axial width w4 of the outer diameter surface 21b is set to be smaller than an axial width w3 of the rubber inner diameter portion 22. An annular inclined surface (an outer diameter side inclined surface) 25 having such a direction that the axial width is made smaller little by little from the pressure receiving surface 24 toward the outer diameter surface 21b is provided in each of the both axial end surfaces 21c. The outer diameter surface 21b is formed into a linear shape in its cross section, that is, formed into a cylindrical surface shape. The inclined surface 25 is formed into a linear shape in its cross section, and a diametrical width w5 thereof is set to be larger than a diametrical width w6 of the rubber outer diameter portion 23.

Further, an annular inclined surface (an inner diameter side inclined surface) 28 having such a direction that the axial width is made smaller little by little from the pressure receiving surface 24 toward the inner diameter surface 21a is provided in each of the both axial end surfaces 21c. The inclined surface is formed into a linear shape in its cross section, and a diametrical width w11 thereof is set to be smaller than both of the diametrical width w2 of the rubber inner diameter portion 22 and the diametrical width w5 of the outer diameter side inclined surface 25. An axial width w12 of the inner diameter side inclined surface 28 is set to be equal or approximately equal to the axial width w10 of the outer diameter side inclined surface 25. The outer diameter of the rubber 21 is set to be smaller than the inner diameter of the cylinder 13.

Further, the annular concavity 26 is provided in the inner diameter surface 21a. A diametrical width (depth) w7 of the concavity 26 is set to be smaller than the diametrical width w11 of the inclined surface 28. An axial width w8 of the concavity 26 is set to be smaller than the axial width w4 of the outer diameter surface 21b. A straight surface 27 formed into a cylindrical surface is provided in each of both sides in an axial direction of the concavity 26 in the inner diameter surface 21a. An axial width w13 of the position constructed by the concavity 26 and the straight surfaces 27 in both sides in the axial direction thereof is set to be equal or approximately equal to the axial width w4 of the outer diameter surface 21b. An inner diameter of the rubber 21 is set to be equal or approximately equal to an outer diameter of the piston rod 12.

A cross sectional shape of the rebound rubber 21 is formed into such a shape as to be symmetrical in the axial direction, as a whole.

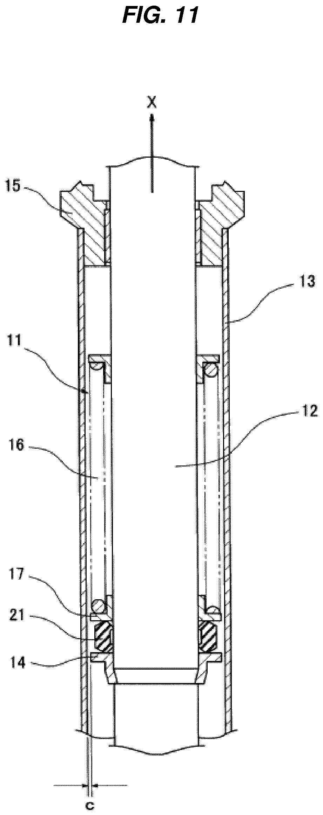

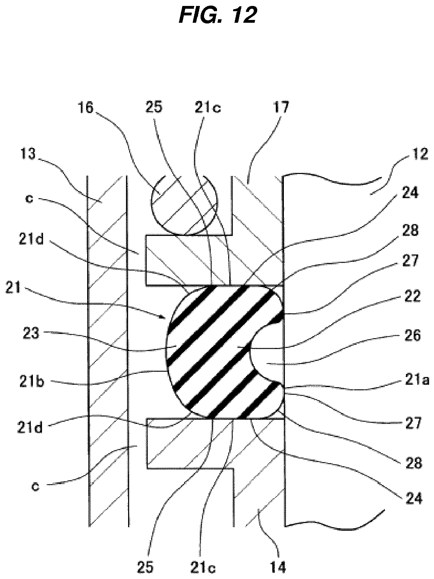

In the case that the rebound rubber 21 having the structure mentioned above is installed to the rebound spring mechanism 11 as shown in Fig. 11 and the compressive load in the axial direction is applied, the rubber 21 elastically deforms in such a manner as to bend like the dogleg cross sectional shape as shown in Fig. 12, that is, elastically deforms in such a manner that the rubber inner diameter portion 22 is inflected and the rubber outer diameter portion 23 protrudes like mountains toward the outer side in the diametrical direction. When the amount of deformation becomes great the center portion in the axial direction of the outer diameter portion 21b is pressed to the inner diameter surface of the cylinder 13. Therefore, according to a deforming attitude of the rubber 21 mentioned above, the end portion 21d in the axial direction of the rubber outer diameter surface 21b does not come close to the diametrical gap c between the rebound sheet 14 and the cylinder 13 or between the spring holder 17 and the cylinder 13 while hardly changing the position thereof before and after the dogleg shaped deformation, the end portion 21d in the axial direction conventionally having tended to be pinched to the diametrical gap c between the rebound sheet 14 and the cylinder 13 or between the spring holder 17 and the cylinder 13. Therefore, it is possible to inhibit the end portion 21d in the axial direction of the rubber outer diameter surface 21c from being pinched to the diametrical gap c between the rebound sheet 14 and the cylinder 13 or between the spring holder 17 and the cylinder 13 so as to be damaged. In the embodiment, since the concavity 26 is provided in the rubber inner diameter portion 22, the rubber 21 further tends to deform like the dogleg shape in comparison with the third embodiment.

Further, since the inclined surface 25 having such a direction that the axial width of the rubber 21 is made smaller little by little from the rubber pressure receiving surface 24 toward the rubber outer diameter surface 21b is provided in each of the both axial end surfaces 21c, and the inclined surface 28 having such a direction that the axial width of the rubber 21 is made smaller little by little from the rubber pressure receiving surface 24 toward the rubber inner diameter surface 21a is provided in each of the both axial end surfaces 21c, a contact area with the spring holder 17 or the rebound sheet 14 is increased little by little in connection with the compression of the rubber 21. Therefore, it is possible to stabilize the deforming attitude of the rubber 21.

### Description of Reference Numerals

- 11: rebound spring mechanism
- 12: piston rod
- 13: cylinder
- 14: rebound sheet
- 15: rod guide
- 16: rebound spring
- 17: spring holder
- 21: rebound rubber
- 21a: inner diameter surface
- 21b: outer diameter surface
- 21c: axial end surface
- 21d: axial end portion
- 22: inner diameter portion
- 23: outer diameter portion
- 24: pressure receiving surface
- 25, 28: inclined surface
- 26: concavity
- 27: straight surface
- O: diametrical center line of rubber volume

## Claims

1. A rebound rubber (21) suitable to be interposed between a stop ring holder (17) which retains one end of a rebound spring (16) in a rebound spring mechanism (11) of a hydraulic shock absorber and a rebound sheet (14) which is fixed to a piston rod, the rebound rubber (21) comprising:
a structure which elastically deforms so that a rubber inner diameter portion (22) is inflected and a rubber outer diameter portion (23) protrudes like mountains toward an outer side in a diametrical direction at the exposing time to a compressive load in an axial direction, by arranging a rubber pressure receiving surface (24) in an inner side in the diametrical direction in relation to a center line (O) in the diametrical direction of a rubber volume in a half-cut cross sectional shape of the rubber,
wherein the annular pressure receiving surface (24) is provided at each of positions which are closer to the inner side in the diametrical direction than the center line (O),
wherein an inclined surface (25) having such a direction that a rubber axial width is made smaller from said rubber pressure receiving surface (24) to a rubber outer diameter surface (21b) is provided in each of both end surfaces in an axial direction of said rubber, and
wherein
an axial width (w4) of the outer diameter surface (21b) is set to be smaller than an axial width (w3) of the rubber inner diameter portion (22), and **characterized in that** a diametrical width (w1) of the pressure receiving surface (24) is set to be smaller than a diametrical width (w2) of the rubber inner diameter portion (22), and **in that**
a diametrical width (w5) of the inclined surface (25) is set to be larger than a diametrical width (w6) of the rubber outer diameter portion (23).

2. The rebound rubber (21) according to claim 1, wherein said rubber inner diameter portion (22) is provided in a rubber inner diameter surface (21a) with a concavity which promotes the inflection of said rubber inner diameter portion (22).

3. The rebound rubber (21) according to claim 2, wherein a straight surface (27) formed into a cylindrical surface is provided in each of both sides in an axial direction of the concavity (26) in the inner diameter surface (21a), and
wherein
an axial width (w8) of the concavity (26) is set to be equal or approximately equal to the axial width (w4) of the outer diameter surface (21b), or
an axial width (w13) of a position constructed by the concavity (26) and the straight surfaces (27) in both sides in the axial direction thereof is set to be equal or approximately equal to the axial width (w4) of the outer diameter surface (21b).

4. The rebound rubber (21) according to claim 1, wherein said rubber inner diameter portion (22) is provided in a rubber inner diameter surface (21a) which is formed into a cylindrical surface shape over a whole length of the rubber inner diameter surface (21a) in the axial direction,
the inclined surface (25) being an outer diameter side inclined surface (25), and
an inner diameter side inclined surface (28) having such a direction that an axial width is made smaller from the pressure receiving surface (24) toward the inner diameter surface (21a) is provided in each of the both axial end surfaces (21c) such that an axial width (w12) of the inner diameter side inclined surface (28) is set to be equal or approximately equal to an axial width (w10) of the outer diameter side inclined surface (25).

## Patentansprüche

1. Dämpfungsgummi (21), der geeignet ist, zwischen einem Anschlagringhalter (17), der ein Ende einer Dämpfungsfeder (16) in einem Dämpfungsfedermechanismus (11) eines hydraulischen Stoßdämpfers zurückhält, und einem Dämpfungsblatt (14), das an einer Kolbenstange befestigt ist, eingefügt zu werden, wobei der Dämpfungsgummi (21) umfasst:
eine Struktur, die sich elastisch so verformt, dass ein Gummiinnendurchmesserabschnitt (22) gekrümmt ist und ein Gummiaußendurchmesserabschnitt (23) zu der einer verdichtenden Last ausgesetzten Zeit wie Berge zu einer Außenseite in einer diametrischen Richtung in einer axialen Richtung vorragt, indem eine einen Gummidruck empfangende Oberfläche (24) in einer inneren Seite in der diametrischen Richtung im Verhältnis zu einer Mittellinie (O) in der diametrischen Richtung eines Gummivolumens in einer halbgeschnittenen Querschnittsform des Gummis angeordnet ist,
wobei die ringförmige druckempfangende Oberfläche (24) an jeder von Positionen bereitgestellt ist, die näher in der diametrischen Richtung an der Innenseite liegen als die Mittellinie (O),
wobei eine geneigte Oberfläche (25), die eine derartige Richtung aufweist, dass eine axiale Breite des Gummis von der den Gummidruck empfangenden Oberfläche (24) zu einer Gummiaußendurchmesseroberfläche (21b) kleiner gemacht ist, in jeder aus beiden Endoberflächen in einer axialen Richtung des Gummis bereitgestellt ist, und
wobei
eine axiale Breite (w4) der Außendurchmesseroberfläche (21b) eingestellt ist, kleiner als eine axiale Breite (w3) des Gummiinnendurchmesserabschnitts (22) zu sein, und
**dadurch gekennzeichnet, dass**
eine diametrische Breite (w1) der druckempfangenden Oberfläche (24) eingestellt ist, kleiner als eine diametrische Breite (w2) des Gummiinnendurchmesserabschnitts (22) zu sein, und dadurch, dass
eine diametrische Breite (w5) der geneigten Oberfläche (25) eingestellt ist, größer als eine diametrische Breite (w6) des Gummiaußendurchmesserabschnitts (23) zu sein.

2. Dämpfungsgummi (21) nach Anspruch 1, wobei der Gummiinnendurchmesserabschnitt (22) in einer Gummiinnendurchmesseroberfläche (21a) mit einer Konkavität bereitgestellt ist, die die Krümmung des Gummiinnendurchmesserabschnitts (22) unterstützt.

3. Dämpfungsgummi (21) nach Anspruch 2, wobei eine gerade Oberfläche (27), die in einer zylindrischen Oberfläche ausgebildet, in jeder von beiden Seiten in einer axialen Richtung der Konkavität (26) in der Innendurchmesseroberfläche (21a) bereitgestellt ist, und
wobei
eine axiale Breite (w8) der Konkavität (26) eingestellt ist, gleich wie oder annähernd gleich zu der axialen Breite (w4) der Außendurchmesseroberfläche (21b) zu sein, oder
eine axiale Breite (w13) einer durch die Konkavität (26) und die geraden Oberflächen (27) in beiden Seiten der axialen Richtung davon konstruierten Position eingestellt ist gleich oder annähernd gleich zu der axialen Breite (w4) der Außendurchmesseroberfläche (21b) zu sein.

4. Dämpfungsgummi (21) nach Anspruch 1, wobei der Gummiinnendurchmesserabschnitt (22) in einer Gummiinnendurchmesseroberfläche (21a) bereitgestellt ist, wie in eine zylindrische Oberflächenform über eine gesamte Länge der Gummiinnendurchmesseroberfläche (21a) in der axialen Richtung ausgebildet ist,
die geneigte Oberfläche (25) eine außendurchmesserseitige geneigte Oberfläche (25) ist, und
eine innendurchmesserseitige geneigte Oberfläche (28), die eine derartige Richtung aufweist, dass eine axiale Breite von der druckempfangenden Oberfläche (24) zu der Innendurchmesseroberfläche (21a) kleiner gemacht ist, in jeder der beiden axialen Endoberflächen (21c) derart bereitgestellt ist, dass eine axiale Breite (w12) der innendurchmesserseitigen geneigten Oberfläche (28) eingestellt ist, gleich wie oder annähernd gleich einer axialen Breite (w10) der außendurchmesserseitigen geneigten Oberfläche (25) zu sein.

## Revendications

1. Caoutchouc de rebond (21) apte à être interposé entre un porte anneau de butée (17) qui retient une extrémité d'un ressort de rebond (16) dans un mécanisme de ressort de rebond (11) d'un amortisseur de choc hydraulique et une feuille de rebond (14) qui est fixée à une tige de piston, le caoutchouc de rebond (21) comprenant :
une structure qui se déforme élastiquement de sorte qu'une portion de diamètre intérieur de caoutchouc (22) est infléchie et une portion de diamètre extérieur de caoutchouc (23) fait saillie comme des montagnes vers un côté extérieur dans un sens diamétral au moment d'exposition à une charge compressive dans un sens axial, par l'agencement d'une surface de réception de pression (24) de caoutchouc dans un côté intérieur dans le sens diamétral par rapport à une ligne centrale (O) dans le sens diamétral d'un volume de caoutchouc dans une forme de demi-coupe transversale du caoutchouc,
dans lequel la surface de réception de pression (24) annulaire est prévue à chacune de positions qui sont plus proches du côté intérieur dans le sens diamétral que de la ligne centrale (O),
dans lequel une surface inclinée (25) ayant un sens tel qu'une largeur axiale de caoutchouc diminue de ladite surface de réception de pression (24) de caoutchouc à une surface de diamètre extérieur (21b) de caoutchouc est prévue dans chacune de deux surfaces d'extrémité dans un sens axial dudit caoutchouc, et
dans lequel une largeur axiale (w4) de la surface de diamètre extérieur (21b) est réglée pour être inférieure à une largeur axiale (w3) de la portion de diamètre intérieur de caoutchouc (22), et
**caractérisé en ce qu'**une largeur diamétrale (w1) de la surface de réception de pression (24) est réglée pour être inférieure à une largeur diamétrale (w2) de la portion de diamètre intérieur de caoutchouc (22), et **en ce que** une largeur diamétrale (w5) de la surface inclinée (25) est réglée pour être supérieure à une largeur diamétrale (w6) de la portion de diamètre extérieur de caoutchouc (23).

2. Caoutchouc de rebond (21) selon la revendication 1, dans lequel ladite portion de diamètre intérieur de caoutchouc (22) est prévue dans une surface de diamètre intérieur (21a) de caoutchouc avec une concavité qui promeut l'infléchissement de ladite portion de diamètre intérieur de caoutchouc (22).

3. Caoutchouc de rebond (21) selon la revendication 2, dans lequel une surface droite (27) formée dans une surface cylindrique est prévue sur chacun des deux côtés dans un sens axial de la concavité (26) dans la surface de diamètre intérieur (21a), et
dans lequel
une largeur axiale (w8) de la concavité (26) est réglée pour être égale ou approximativement égale à la largeur axiale (w4) de la surface de diamètre extérieur (21b), ou
une largeur axiale (w13) d'une position construite par la concavité (26) et les surfaces droites (27) des deux côtés dans le sens axial de celle-ci est réglée pour être égale ou approximativement égale à la largeur axiale (w4) de la surface de diamètre extérieur (21b).

4. Caoutchouc de rebond (21) selon la revendication 1, dans lequel dans lequel ladite portion de diamètre intérieur de caoutchouc (22) est prévue dans une surface de diamètre intérieur (21a) de caoutchouc qui est formée dans une forme de surface cylindrique sur une longueur complète de la surface de diamètre intérieur (21a) de caoutchouc dans le sens axial,
la surface inclinée (25) étant une surface inclinée (25) de côté de diamètre extérieur, et
une surface inclinée de côté de diamètre intérieur (28) ayant un sens tel qu'une largeur axiale diminue de la surface de réception de pression (24) vers la surface de diamètre intérieur (21a) est prévue dans chacune des deux surfaces d'extrémité axiale (21c) de sorte qu'une largeur axiale (w12) de la surface inclinée de côté de diamètre intérieur (28) est réglée pour être égale ou approximativement égale à une largeur axiale (w10) de la surface inclinée (25) de côté de diamètre extérieur.
